Europäisches Patentamt

European Patent Office

Office européen des brevets

Publication number: **0 275 407**
**A1**

# EUROPEAN PATENT APPLICATION

(21) Application number: **87117235.9**

(22) Date of filing: **23.11.87**

(51) Int. Cl.⁴ **B60G 7/02** , B60G 3.06 ,
B60G 11.26 , B60G 11/14

(30) Priority: **25.11.86 IT 6787786**

(43) Date of publication of application:
**27.07.88 Bulletin 88/30**

(84) Designated Contracting States:
**BE DE FR GB NL SE**

(71) Applicant: **IVECO FIAT S.p.A.**
**Via Puglia 35**
**I-10156 Torino(IT)**

(72) Inventor: **Messori, Pier Paolo**
**Via Roma, 5/1**
**I-10025 Pino Torinese(IT)**
Inventor: **Royal, Franz**
**Dornbäumlesweg, 16**
**D-7910 Neu Ulm(DE)**

(74) Representative: **Prato, Roberto et al**
**c/o Ingg. Carlo e Mario Torta Via Viotti 9**
**I-10121 Torino(IT)**

(54) Unit for elastically suspending the wheels from the frame of a motor vehicle.

(57) The unit (1) comprises a load-bearing structure (4), two rocker elements (5) hinged to said load-bearing structure (4) and provided with a front transverse arm (15) extending into a respective wheelhouse (3) and hinged to the upright carrying the journal of a respective wheel (2), and a rear transverse arm (16) connected to respective said elastically deformable means (6) disposed outside said wheelhouse (3).

Fig.1

# UNIT FOR ELASTICALLY SUSPENDING THE WHEELS FROM THE FRAME OF A MOTOR VEHICLE

Units for elastically suspending the wheels from the frame of a motor vehicle are known in which a rocker arm is hinged at one end to a fixed point on the vehicle frame and hinged at its opposite end to an upright carrying the wheel journal; this arm is then connected elastically to the frame, for example by a helical spring or an air spring, able to deform elastically under the action of the loads applied to the wheel; the oscillations induced in the wheel by the effect of these loads are damped by a shock absorber interposed between the upright and the frame. Suspensions of this type have numerous drawbacks. Firstly, a minimum space must be provided about the wheel to enable the wheel to undergo steering and vertical springing movements. This space, which is physically bounded by the wheelhouse, is therefore determined by geometrical considerations, and is subtracted from the useful internal space of the vehicle.

In known suspensions of the described type, the elastic element is housed in the wheelhouse. Consequently, the wheelhouse has an overall size greater than the minimum space required for the wheel movements. In particular, as the total overall vehicle size is fixed, this means that the useful internal space in the region between the two wheelhouses is reduced, both because of a smaller available width and because of a greater floor height. This arrangement of the elastic elements is also disadvantageous from the vehicle stability aspect, because the distance between their axes is relatively small. The preferred arrangement would be one in which this distance between axes is as large as possible, ie with the elastic elements disposed in proximity to the vehicle sides, so as to increase the redressing moment, of which the said distance between axes represents the arm, and which is exerted by said elastic elements as a reaction to static or dynamic loads which tend to destabilise the vehicle.

Finally, the suspension, the steering and braking can only be tested after the entire suspension, steering and braking system have been mounted on the vehicle, ie in practice only when the vehicle is put on the road.

The object of the present invention is to provide a unit for elastically suspending motor vehicle wheels from the vehicle frame, which is free of the aforesaid drawbacks associated with suspensions of known type.

Said object is attained according to the invention by a unit for elastically suspending motor vehicle wheels from the vehicle frame, of the type comprising a pair of rocker elements hinged to said frame on a fixed axis and to respective uprights connected to respective journals of said wheels, and elastically deformable means and damping means interposed between said rocker elements and said frame, characterised by comprising a load-bearing structure to be fixed to said frame, said rocker elements comprising an intermediate portion disposed longitudinally to said motor vehicle and hinged to said load-bearing structure, a first arm extending transversely from the front end of said intermediate portion to the interior of a wheelhouse and connected thereat to said upright of said respective wheel, and a second arm extending transversely from the rear end of said intermediate portion towards the outside of said vehicle, exterior to said wheelhouse, and connected to respective said elastically deformable means.

The present invention will be more apparent from the description of a preferred embodiment thereof given hereinafter by way of non-limiting example with reference to the accompanying drawings, in which:

Figure 1 is a diagrammatic plan view from above of a unit for elastically suspending the front wheels of a motor bus constructed in accordance with the present invention; and

Figure 2 is a diagrammatic section on the line II-II of Figure 1.

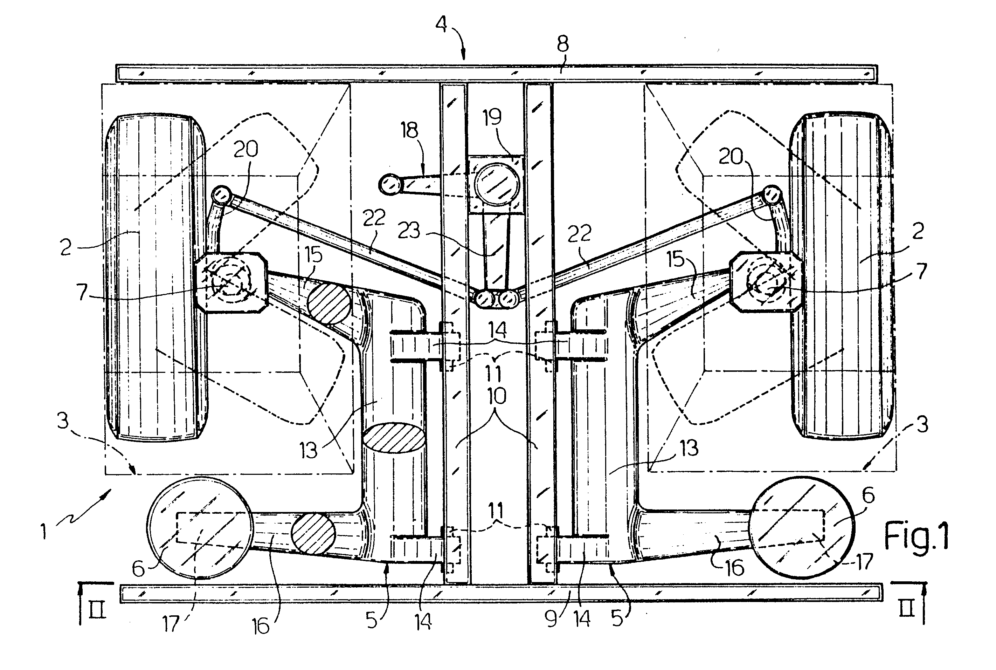

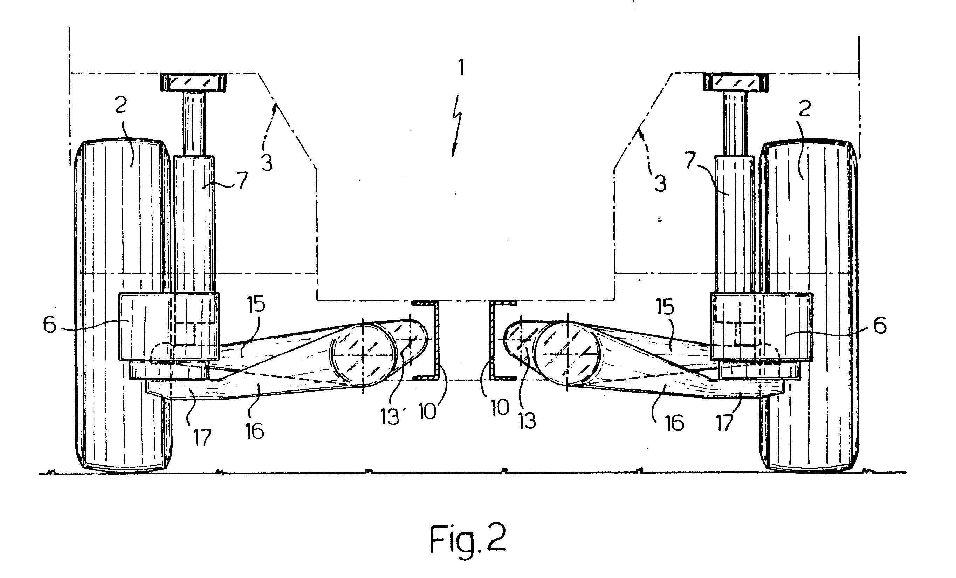

In Figures 1 and 2, the reference numeral 1 indicates overall a unit for elastically suspending the front wheels 2 of a vehicle, in particular a motor bus, from the vehicle frame. The wheels 2 are housed in respective wheelhouses 3, the outlines of which are indicated diagrammatically by dashed and dotted lines. The unit 1 comprises a load-bearing structure 4, a pair of rocker elements 5 hinged at opposite ends to the load-bearing structure 4, a pair of air springs 6 and a pair of shock absorbers 7.

The load-bearing structure 4, when in use and fixed to the frame, consists of a front cross-member 8 and a rear cross-member 9, which are connected together by a pair of central, parallel longitudinal members 10. The cross-members 8, 9 and longitudinal members 10 are conveniently constructed of steel sections and are joined together by welding.

The longitudinal members 10 are formed from C-shaped sections, with their concavities facing outwards from the vehicle. A respective rocker element 5 is hinged to each longitudinal member 10 by a pair of pins 11, for example of the known "silentbloc" type, disposed one in proximity to the rear cross-member 9 and the other towards the middle of the longitudinal member 10. Said rocker element 5 comprises an intermediate portion 13 disposed longitudinally to the vehicle, and carrying integrally with it two short arms 14 connected to the respective pins 11, a front arm 15 extending transversely towards the outside of the vehicle and inclined forwards, and a rear arm 16 extending transversely towards the outside of the vehicle, external to the wheelhouse 3.

The front arm 15 is hinged in conventional manner to an upright, not shown, carrying the journal of the wheel 2. The respective shock absorber 7 is fixed in known manner between said upright and the frame, within the wheelhouse 3.

The rear arm 16 is connected at its outer end 17 to a respective air spring 6 interposed between the rear arm 16 and the frame (not shown) and housed between the wheelhouse 3 and the rear cross-member 9.

From a constructional viewpoint, the cross-section of the rocker elements 5 is substantially elliptical of horizontal major axis in their intermediate portion 13, and substantially circular in their front arm 15 and rear arm 16. The rocker elements 5 are conveniently formed by joining two pressed half-shells together longitudinally by welding.

As shown in Figure 1, the load-bearing structure 4 also supports the steering linkage, consisting of a right-angled transmission lever 18 hinged to a plate 19 rigid with the longitudinal members 10 and controlled in known manner by the steering wheel, two steering arms 20 connected to the respective uprights (not shown) and two connection bars 22 hinged at their ends to an arm 23 of the transmission lever and to the respective steering arm 20. The operation of the suspension unit 1 is as follows.

The loads acting on the wheel 2 are transmitted from the front arm 15, through the intermediate portion 13, to the rear arm 16, and from here to the vehicle frame by the air spring 6. The shock absorber 7 damps the amplitude of the elastic oscillations in known manner. Steering is done conventionally by rotating the transmission lever 18 by known linkages, not shown, controlled by the vehicle steering wheel. By means of the connection bars 22, the transmission lever 18 moves the steering arms 20 connected to the uprights of the wheels 2. In Figure 1, the outlines of the wheels 2 in their limiting positions are shown diagrammatically. The advantages of the suspension unit constructed in accordance with the present invention are apparent.

Firstly, the elastic elements 6, which in the described example consist of air springs, are housed outside the wheelhouse 3, behind the wheelhouse itself. This enables the transverse dimension of the wheelhouse 3 to be reduced, by limiting it only to the space necessary for steering and for springing the wheels 2, to the advantage of the interior space available in the region between the two wheelhouses, and also enables the floor (indicated diagrammatically by dashed and dotted lines in Figure 2) to be lowered substantially into contact with the longitudinal members 10, as there is no need in these regions to provide seats for upperly housing the springs.

Moreover, as there is no longer any restriction in the transverse direction on the position of the springs 6, they can be disposed with a greater distance between their axes, up to a maximum value equal to the difference between the internal distance between the vehicle side walls and the diameter of the springs 6. This enables a very efficient redressing effect to be obtained, to possibly dispense with the torsion bar, with consequent economical advantage.

Finally, the unit 1 can be completely assembled and tested off the line (including the steering and braking functions), and then rapidly connected to the finished vehicle body, it being necessary only to fix the load-bearing structure 4 and make the pneumatic connections, conveniently by instant couplings. The aforesaid advantages make it possible and economical to use the unit 1 on motor buses used for urban transportation, for interurban transportation, and for long-distance tourist travel. The small overall size of the unit is particularly useful in these latter versions, in which considerable space problems exist due to the increased size of the luggage compartment and petrol tank. A considerable economy of scale is obtained, in that different versions can be fitted with the same suspension unit. Finally, it is apparent that modifications can be made to the unit 1 but without leaving the scope of protection of the present invention.

In particular, the shape of the elements 5 and the method of connecting these elements to the load-bearing structure 4, to the elastic elements 6, to the wheels 2 and to the shock absorbers 7 can vary. The shape of the load-bearing structure 4 can also vary. Finally, the elastic elements can consist of helical springs, or of air springs connected to helical springs.

## Claims

1. A unit for elastically suspending motor vehicle wheels from the vehicle frame, of the type comprising a pair of rocker elements hinged to said frame on a fixed axis and to respective uprights connected to respective journals of said wheels, and elastically deformable means and damping means interposed between said rocker elements and said frame, characterised by comprising a load-bearing structure (4) to be fixed to said frame,

3

said rocker elements (5) comprising an intermediate portion (13) disposed longitudinally to said motor vehicle and hinged to said load-bearing structure (4), a first arm (15) extending transversely from the front end of said intermediate portion (13) to the interior of a wheelhouse (3) and connected thereat to said upright of said respective wheel (2), and a second arm (16) extending transversely from the rear end of said intermediate portion (13) towards the outside of said vehicle. exterior to said wheelhouse (3), and connected to respective said elastically deformable means (6).

2. A unit as claimed in claim 1, characterised in that said load-bearing structure (4) comprises a pair of cross-members (8. 9) connected together by a pair of central, parallel longitudinal members (10).

3. A unit as claimed in claim 2. characterised in that said rocker elements (5) are hinged to said load-bearing structure (4) by pins (11) interposed between said longitudinal members (10) and respective arms (14) which originate from said central portion (13) of said rocker elements (5).

4. A unit as claimed in any one of the preceding claims, characterised in that said central portion (13) of said rocker elements (5) is of substantially elliptical cross-section of horizontal major axis.

5. A unit as claimed in any one of the preceding claims, characterised in that said first arm (15) and second arm (16) of said rocker elements (5) are of substantially circular cross-section.

6. A unit as claimed in any one of the preceding claims. characterised in that said rocker elements (5) comprise a pair of half-shells welded together.

7. A unit as claimed in any one of the preceding claims. characterised in that said elastically deformable elements (6) comprise a pair of air springs.

8. A unit as claimed in any one of the preceding claims, characterised in that said elastically deformable elements (6) comprise a pair of helical springs.

9. A unit as claimed in any one of the preceding claims, characterised by being used in a front vehicle axle; said load-bearing structure (4) comprising support means (19) for the vehicle steering linkage (18. 22).

10. A unit as claimed in any one of the preceding claims, characterised in that said vehicle is a motor bus.

Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-C- 953 228 (M.A.N.) <br> * Figures 1,2; page 2, lines 25-58 * <br> --- | 1-3,7, 10 | B 60 G 7/02 <br> B 60 G 3/06 <br> B 60 G 11/26 <br> B 60 G 11/14 |
| A | DE-B-1 004 055 (M.A.N.) <br> * Figure 3; column 2, lines 23-32; column 1, lines 42-55 * <br> --- | 1,2,7 | |
| A | FR-A-2 507 974 (ZWALVE) <br> * Figures 2,5,6; page 5, lines 1-12; claim 2 * <br> --- | 4,5,9 | |
| A | DE-U-7 245 258 (PEKA-FAHRZEUGBAU EBERHARDT KG) <br> * Figures 1-3 * <br> --- | 6 | |
| A | GB-A- 540 646 (MACBETH) <br> * Figures 1-14; page 2, lines 16-35 * <br> --- | 6 | |
| A | DE-A-2 417 043 (DICKENS) <br> * Figures 1-6,10-12 * <br> --- | 1,8 | |
| A | FR-A-2 156 290 (CARROZZERIA S.I.C.C.A. S.R.L.) <br> * Figures I-V; page 1, lines 14-25; page 2, lines 17-21; claim 4 * <br> ----- | 9 | TECHNICAL FIELDS SEARCHED (Int. Cl.4) <br><br> B 60 G |

The present search report has been drawn up for all claims

| Place of search | Date of completion of the search | Examiner |
|---|---|---|
| THE HAGUE | 29-02-1988 | TORSIUS A. |